# EUROPÄISCHE PATENTSCHRIFT

(11) **EP 2 273 471 B1**
(45) Veröffentlichungstag und Bekanntmachung des Hinweises auf die Patenterteilung: **22.08.2012**
(21) Anmeldenummer: 10006239.7
(22) Anmeldetag: 16.06.2010
(51) Int. Cl.: B60R 1/00, G08G 1/16, G06T 17/00

(54) **Verfahren zum Betreiben eines Fahrerassistenzsystems eines Fahrzeugs**
Method for operating a vehicle's driver assistance system
Procédé de fonctionnement d'un système d'assistance du conducteur d'un véhicule

(30) Priorität: 10.07.2009 DE 102009032541
(43) Veröffentlichungstag der Anmeldung: 12.01.2011
(73) Patentinhaber: Audi AG, 85045 Ingolstadt (DE)
(72) Erfinder: Popken, Markus, 85139 Wettstetten (DE)
(74) Vertreter: Thielmann, Frank

(56) Entgegenhaltungen:
- EP-A1- 1 717 757
- EP-A1- 1 859 997
- DE-A1- 10 335 601
- DE-U1- 20 105 340
- US-A1- 2007 279 493

## Beschreibung

Die Erfindung betrifft ein Verfahren zum Betreiben eines Fahrerassistenzsystems eines Fahrzeugs. Bei dem Fahrerassistenzsystem wird dabei mit wenigstens einem Sensor eine relative Lage eines außerhalb des Fahrzeugs befindlichen Objekts bezüglich des wenigstens einen Sensors erfasst und anhand der erfassten Lage und anhand eines Modells für zumindest eine Kontur einer Außenfläche des Fahrzeugs ein Abstand des Objekts zu dem Fahrzeug ermittelt. Die Erfindung betrifft auch ein Fahrerassistenzsystem, das zur Durchführung des Verfahrens geeignet ist.

Ein Fahrerassistenzsystem (FAS) ist eine Einrichtung für ein Fahrzeug, mit der einem Fahrer des Fahrzeugs das Durchführen bestimmte Fahrmanöver erleichtert wird. Das Fahrerassistenzsystem überwacht dazu eine Umgebung des Fahrzeugs mithilfe von Sensoren. Sobald durch das Fahrerassistenzsystem erkannt wird, dass eine Kollision mit einem Gegenstand in der Umgebung des Fahrzeugs droht, kann durch das Fahrerassistenzsystem beispielsweise ein Warnsignal an den Fahrer abgegeben werden. Es kann aber auch vorgesehen sein, dass das Fahrerassistenzsystem über Aktoren Einfluss z.B. auf die Lenkung oder die Bremse des Fahrzeugs nimmt.

Ein Beispiel für ein Fahrerassistenzsystem ist ein System zum Überwachen eines Abstands zu einem vorausfahrenden Fahrzeug. Wird dieser Abstand beispielsweise durch ein plötzliches Abbremsen des vorausfahrenden Fahrzeugs zu gering, kann das Fahrerassistenzsystem beispielsweise eine Bremsung des mit dem Fahrerassistenzsystem ausgerüsteten Fahrzeugs einleiten. Ein Beispiel für ein Fahrerassistenzsystem, das bei niedrigen Geschwindigkeiten des Fahrzeugs zum Einsatz kommt, ist eine Einparkhilfe. Eine solche Einparkhilfe erlaubt es einem Fahrer beispielsweise, das mit der Einparkhilfe ausgestattete Fahrzeug auch dann sicher in eine Parklücke zu manövrieren, wenn er keine direkte Sicht auf Objekte, wie z.B. Pfosten, Bordsteine oder Stoßstangen anderer Fahrzeuge, hat, welche die Parklücke begrenzen.

Bei einer solchen Einparkhilfe kann dazu beispielsweise mittels Ultraschallsensoren ermittelt werden, wie groß ein verbleibender Zwischenraum zwischen dem einzuparkenden Fahrzeug und denjenigen Objekten ist, zwischen denen das Fahrzeug geparkt werden soll. Die Ultraschallsensoren senden dazu Ultraschall aus, der von diesen Objekten reflektiert wird und wieder zurück zu den Sensoren gelangt. Aus der Zeitdauer zwischen dem Aussenden und dem Empfangen des Ultraschalls kann durch den Sensor dann ermittelt werden, in welchem Abstand sich ein Objekt von dem Sensor befindet. Der Abstand kann dann dem Fahrer angezeigt werden.

Für Einparkhilfen und ähnliche Fahrerassistenzsysteme für den unteren Geschwindigkeitsbereich ist bekannt, in einer Steuereinheit des Fahrerassistenzsystems Informationen über eine Breite des Fahrzeugs an dessen breitester Stelle und über die maximale Länge des Fahrzeugs abzuspeichern. Anhand der sich daraus ergebenden rechteckigen Kontur kann durch die Steuereinheit von einem Abstand eines Objekts zu einem Sensor des Fahrerassistenzsystems darauf rückgeschlossen werden, welchen Abstand das Objekt zu anderen Bereichen des Fahrzeugs mindestens hat. Dies ermöglicht es, auch dann eine bevorstehende Kollision eines Bereichs des Fahrzeugs mit einem fahrzeugexternen Objekt im Voraus zu erkennen, wenn in dem entsprechenden Bereich selbst kein Sensor zum Messen eines Abstands vorhanden ist.

Die DE 103 35 601 A1 beschreibt ein Verfahren zur computergestützten Klassifizierung von dreidimensionalen Objekten zu einer oder mehreren vorgegebenen Objektklassen. Die Klassifizierung kann beim Erfassen der Umgebung eines Fahrzeugs dazu genutzt werden, die Objekte in der Umgebung in entsprechende Klassen einzuteilen und ein Fahrerassistenzsystem in Abhängigkeit von der bestimmten Klasse anzusteuern.

Aus der US 2007/0279493 A1 ist ein Fahrerassistenzsystem zur Unterstützung des Fahrers beim Einparken bekannt. Hierbei wird dem Fahrer ein Bild der Umgebung des Fahrzeugs, das von zumindest einer Videokamera aufgezeichnet wird, auf einem Bildschirm dargestellt. Um dem Fahrer das Einparken zu erleichtern, wird auf dem Bildschirm zusätzlich eine dreidimensionale Darstellung des Fahrzeugs angezeigt.

Der Einsatz von Fahrerassistenzsystemen hat in der Vergangenheit das Durchführen schwieriger Fahrmanöver, wie zum Beispiel das Einparken eines Fahrzeugs, sehr vereinfacht. Daher wird angestrebt, die Zahl der Manöver, bei denen Fahrerassistenzsysteme einen Fahrer unterstützen können, zu erhöhen.

Es ist Aufgabe der vorliegenden Erfindung, den Einsatz eines Fahrerassistenzsystems zum Durchführen von Fahrmanövern zu ermöglichen, bei denen bisherige Fahrerassistenzsysteme keine ausreichende Unterstützung für den Fahrer bieten.

Die Aufgabe wird durch ein Verfahren zum Betreiben eines Fahrerassistenzsystems gemäß Patentanspruch 1 gelöst. Die Aufgabe wird auch durch ein Fahrerassistenzsystem gemäß Patentanspruch 7 gelöst. Vorteilhafte Weiterbildungen der Erfindung sind durch die Unteransprüche gegeben.

Bei dem erfindungsgemäßen Verfahren wird mit wenigstens einem Sensor des Fahrerassistenzsystems eine relative Lage eines außerhalb des Fahrzeugs befindlichen Objekts bezüglich des wenigstens einen Sensors erfasst und anhand der erfassten Lage und anhand eines Modells für zumindest eine Kontur einer Außenfläche des Fahrzeugs ein Abstand des Objekts zu dem Fahrzeug ermittelt. Das Modell bildet dabei eine dreidimensionale Form der Außenfläche des Fahrzeugs nach.

Ein Sensor kann dabei beispielsweise ein Ultraschall- oder Radarsensor sein. Es kann sich bei dem Sensor aber auch um eine Kamera zum Erstellen von Videobildern oder Bildfolgen handeln. Je nach Typ des verwendeten Sensors kann es sich bei der relativen Lage beispielsweise um einen Abstand zwischen dem Sensor und dem Objekt handeln oder auch um einen Winkel, den eine Verbindungslinie zwischen dem Sensor und dem Objekt mit einer Achse des Sensors einschließt. Bei einer als Sensor eingesetzten Kamera kann es sich bei der Lage um die Position des Objekts in dem von der Kamera erzeugten Bild handeln. Die hier genannten Beispiele für Sensoren und für die Definition einer Lage eines Objekts sind nicht als abschließende Aufzählungen aufzufassen.

Indem bei dem Modell Informationen über eine dreidimensionale Erstreckung der Außenfläche bereitgestellt werden, kann insbesondere ermittelt werden, in welcher Höhe Teile der Außenfläche des Fahrzeugs von dem Fahrzeug abstehen. Dadurch kann beispielsweise ermittelt werden, ob sich ein Außenspiegel des Fahrzeugs hoch genug an einem Fahrzeug befindet, um mit dem Fahrzeug in einem so geringen Abstand an einem Pfosten vorbeifahren zu können, dass der Außenspiegel über den Pfosten hinwegbewegt wird. Mit anderen Worten ergibt sich der Vorteil, dass mittels des erfindungsgemäßen Verfahrens einem Fahrer Fahrmanöver ermöglicht werden, die mit einem Fahrerassistenzsystem aus dem Stand der Technik, das lediglich die Breite und die Länge des Fahrzeugs berücksichtigt, nicht unterstützt werden können.

Das erfindungsgemäße Verfahren wird in vorteilhafter Weise weitergebildet, wenn zu einem an die Außenfläche angrenzenden Bereich außerhalb des Fahrzeugs Informationen darüber gespeichert werden, wo sich das Objekt in dem Bereich befindet. Indem die Position des Objekts bezüglich des Fahrzeugs gespeichert wird, ergibt sich der Vorteil, dass diese Information auch zu einem zukünftigen Zeitpunkt zur Verfügung steht. Bevorzugt wird dabei auch die Höhe eines Objekts mit abgespeichert. Mit anderen Worten werden bevorzugt für einen dreidimensionalen Bereich, also ein Volumen, das an die Außenfläche des Fahrzeugs angrenzt, Informationen über darin befindliche Objekte gespeichert.

Bei einer Weiterbildung des erfindungsgemäßen Verfahrens ist der Bereich in eine Mehrzahl von Teilbereichen unterteilt, und es wird zu wenigstens einem Teilbereich die Information gespeichert, ob sich zumindest ein Teil des Objekts innerhalb des Teilbereichs befindet. Durch Unterteilen des Bereichs beispielsweise in Rechtecke oder Quader lässt sich eine Umgebung des Fahrzeugs mit nur sehr geringem Bedarf an Rechenleistung und Speicherplatz effizient überwachen.

Ein weiterer Vorteil ergibt sich, wenn zum Ermitteln des Abstands zusätzlich ein Modell für eine Form des Objekts bereitgestellt wird. Mit anderen Worten werden die mittels der Sensoren erfassten Messpunkte, die eine Lage des Objekts beschreiben, zu einem die Umrisse des Objekts beschreibenden Modell zusammengefasst. Dies vereinfacht in vorteilhafter Weise das Ermitteln des Abstands zwischen dem Fahrzeug und dem Objekt. Außerdem benötigt ein solches Modell weniger Speicher als die Gesamtheit der Messpunkte. Es ist des Weiteren auch möglich, solche Bereiche des Objekts beim Bestimmen des Abstands zu berücksichtigen, die von den Sensoren nicht direkt erfasst worden sind.

Ein weiterer Vorteil ergibt sich, wenn eine Eigenbewegung des Fahrzeugs und/oder eine Bewegung des Objekts erfasst wird und zu einem vorgegebenen zukünftigen Zeitpunkt der Abstand zwischen dem Fahrzeug und dem Objekt anhand der erfassten Eigenbewegung und/oder der erfassten Bewegung des Objekts berechnet wird. Eine solche Berechnung wird dabei zu dem zukünftigen Zeitpunkt durchgeführt, wenn eine relative Lage des Objekts zu dem wenigstens einen Sensor nicht mehr erfassbar ist. Mit anderen Worten wird bei dieser Weiterbildung des erfindungsgemäßen Verfahrens die Position des Objekts in Bezug auf das Fahrzeug mithilfe von Informationen über die Relativbewegung der beiden Gegenstände zueinander extrapoliert. Dadurch ergibt sich der Vorteil, dass der Abstand des Fahrzeugs zu dem Objekt auch dann überwacht werden kann, wenn sich das Objekt wegen einer Rollbewegung des Fahrzeugs oder wegen einer Bewegung des Objekts selbst zu dem zukünftigen Zeitpunkt nicht mehr in demjenigen Bereich befindet, in dem der Abstand zu dem Objekt von dem wenigstens einem Sensor erneut ermittelt werden kann.

Eine andere vorteilhafte Weiterbildung des Verfahrens bezieht sich auf ein Bauteil des Fahrzeugs, durch welches in Abhängigkeit von einem Zustand des Bauteils eine äußere Form des Fahrzeugs bestimmt ist. Handelt es sich bei dem Bauteil beispielsweise um einen verstellbaren Außenspiegel, kann der Zustand beispielsweise eine Stellung des Außenspiegels sein. In diesem Fall ergeben sich in Abhängigkeit von der Stellung des Außenspiegels unterschiedliche dreidimensionale Formen der Außenfläche des Fahrzeugs im Bereich des Außenspiegels. Gemäß der Weiterbildung des Verfahren wird für das zumindest eine Bauteil dieser Zustand erfasst und das Modell für die Form des Fahrzeugs abhängig von dem erfassten Zustand verändert. Durch Berücksichtigen des Zustands des Bauteils ergibt sich der Vorteil, dass das Fahrerassistenzsystem auch bei einer veränderlichen äußeren Form des Fahrzeugs den Abstand eines äußeren Objekts zu dem Fahrzeug sehr genau bestimmen kann. Dies ermöglicht es in vorteilhafter Weise, einem Fahrer auch dann zuverlässig Unterstützung bei Fahrmanövern zu bieten, wenn eine äußere Form des Fahrzeugs veränderbar ist.

Zu der Erfindung gehört auch ein Fahrerassistenzsystem für ein Fahrzeug mit wenigstens einem Sensor und einem Steuergerät, die miteinander verbunden sind. Der Sensor ist dabei dazu ausgelegt, eine Lage eines außerhalb des Fahrzeugs befindlichen Objekts bezüglich des Sensors zu erfassen. Das Steuergerät ist dazu ausgelegt, ein Messsignal von dem wenigstens einen Sensor zu empfangen, anhand des Messsignals einen Abstand des Objekts zu dem Fahrzeug zu ermitteln und in Abhängigkeit von dem ermittelten Abstand ein Steuersignal an einem Ausgang des Steuergeräts zu erzeugen. Des Weiteren ist bei dem Steuergerät vorgesehen, dass in einem Speicher des Steuergeräts Daten gespeichert sind, durch die eine dreidimensionale Form einer Außenfläche des Fahrzeugs beschrieben ist. Mit diesem erfindungsgemäßen Fahrerassistenzsystem ist es möglich, das erfindungsgemäße Verfahren zum Betreiben eines Fahrerassistenzsystems auszuführen. Damit ergeben sich mit dem erfindungsgemäßen Fahrerassistenzsystem dieselben Vorteile, wie sie sich auch durch das erfindungsgemäße Verfahren selbst ergeben.

In Bezug auf ein Bauteil des Fahrzeugs, durch das abhängig von seinem Zustand in der oben bereits beschriebenen Weise eine äußere Form des Fahrzeugs bestimmt ist, ergibt sich für das Fahrerassistenzsystem eine vorteilhafte Weiterbildung, wenn das Steuergerät dazu ausgelegt ist, ein Signal betreffend den Zustand des Bauteils zu empfangen, und wenn das Steuergerät dazu ausgelegt ist, anhand des Signals weitere Daten betreffend eine Änderung der Form zu ermitteln. Dadurch ergeben sich die gleichen Vorteile, wie bei der entsprechenden Weiterbildung des erfindungsgemäßen Verfahrens.

Selbstverständlich sind die übrigen, im Zusammenhang mit dem erfindungsgemäßen Verfahren beschriebenen Weiterbildungen entsprechend auch für das erfindungsgemäße Fahrerassistenzsystem möglich.

Die Erfindung wird im Folgenden anhand von Ausführungsbeispielen näher erläutert. Dazu zeigen:

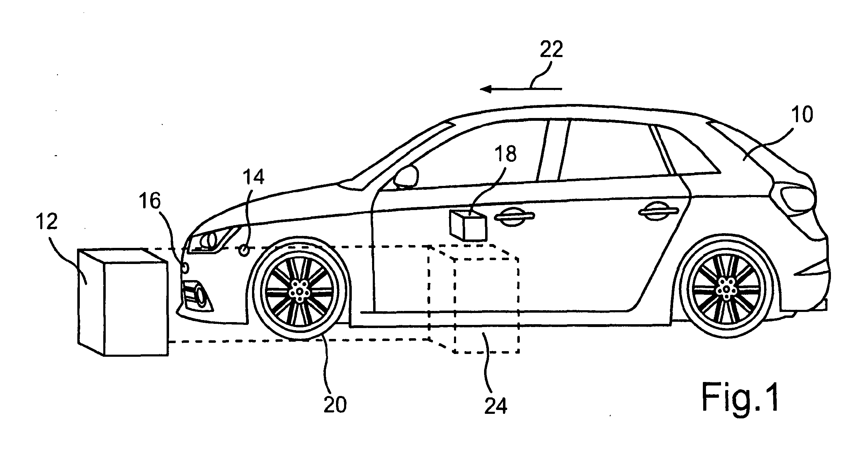

- Fig. 1: eine perspektivische Darstellung eines dreidimensionalen Modells eines Fahrzeugs und eines Modells eines außerhalb des Fahr- zeugs befindlichen Pfostens, die gemäß einer bevorzugten Aus- führungsform des erfindungsgemäßen Verfahrens in einer Steuer- einheit einer Ausführungsform des erfindungsgemäßen Fahreras- sistenzsystems gespeichert sind;

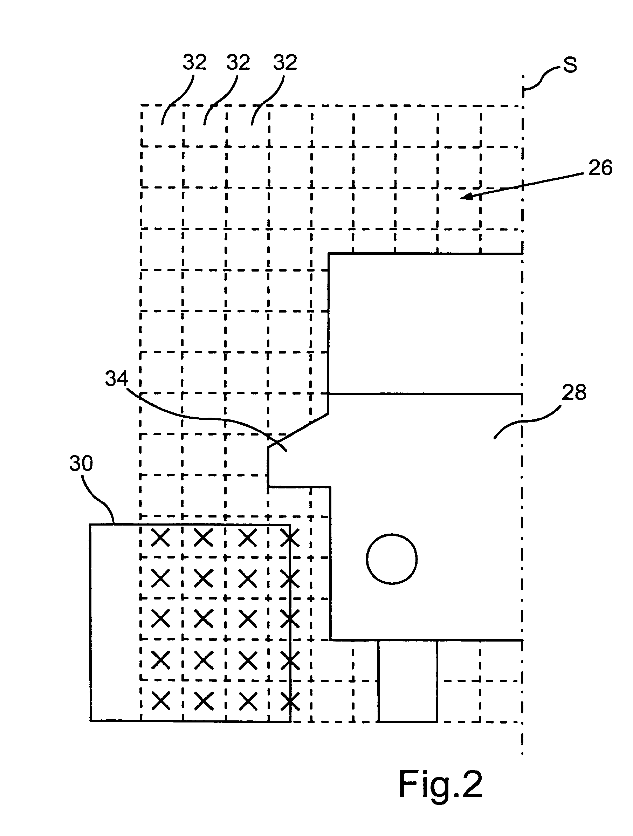

- Fig. 2: eine schematische Darstellung zu einer Ausführungsform des er- findungsgemäßen Verfahrens, bei der zu einer Umgebung eines Fahrzeugs Informationen über eine Position eines Pfostens ge- speichert werden, wobei die Umgebung dazu in einzelne Teilbe- reiche unterteilt ist.

In Fig. 1 sind das Modell eines Fahrzeugs 10 und das Modell eines Pfostens 12 gezeigt. Die Modelle sind in Form von numerischen Daten in einem Arbeitsspeicher einer Steuereinheit eines Fahrerassistenzsystems eines Personenkraftwagens gespeichert. Bei den Daten kann es sich z.B. um eine Menge von einzelnen Punkten handeln, die Punkte auf der Oberfläche des Fahrzeugs 10 bzw. des Pfostens 12 darstellen. Es kann sich bei den Daten aber auch z.B. um geometrische Daten, wie z.B. Vektoren, oder auch um geometrische Grundformen, wie z.B. Quader, Zylinder oder Rechtecke, handeln. Des Weiteren kann bei der Steuereinheit zum Modellieren von Objekten, wie. z.B. dem Pfosten 12, auch vorgesehen sein, für ein an eine Außenfläche des Fahrzeugs 10 angrenzendes Volumen zu einzelnen quaderförmigen Bereichen des Volumens lediglich die Information abzuspeichern, ob sich in dem quaderförmige Bereichen ein Objekt befindet oder nicht. Diese Form des Modellierens ist weiter unten im Zusammenhang mit Fig. 2 näher erläutert.

Für das Fahrzeug 10 ist ein Modell für eine Grundform des Fahrzeugs 10 bei einem Start des Steuereinheit einem nicht-flüchtigen Speicher entnommen worden, der sich ebenfalls in der Steuereinheit befindet. Bei dem Modell für das Fahrzeug 10 ist die dreidimensionale Form des Fahrzeugs nachgebildet. Insbesondere ist bei dem Modell ein Außenspiegel 18 des Fahrzeugs 10 so genau nachgebildet, dass anhand des Modells erkennbar ist, in welcher Höhe über dem Boden Teile des Außenspiegels 18 seitlich von dem Fahrzeug 10 abstehen.

Bei dem Modell für das Fahrzeug 10 kann auch berücksichtigt sein, welche Stellung der Außenspiegel 18 momentan aufweist. Der Außenspiegel 18 kann an das Fahrzeug angelegt sein, um mit dem Fahrzeug beispielsweise in eine Garage fahren zu können. Für den normalen Fahrbetrieb ist der Außenspiegel 18 dagegen ausgeklappt.

Um die Stellung des Außenspiegels 18 in dem Modell berücksichtigen zu können, kann durch einen Controller zum Steuern der Spiegelposition über einen Datenbus des Fahrzeugs, z.B. einen CAN-Bus (CAN - Controller Area Network), ein Signal an die Steuereinheit des Fahrerassistenzsystems übermittelt werden. Dadurch steht dem Fahrerassistenzsystem eine Information über die momentane Stellung des Außenspiegels 18 zur Verfügung. Die aus dem nicht-flüchtigen Speicher der Steuereinheit entnommenen Daten für das Modell für die Grundform des Fahrzeugs 10 werden dann in der Weise ergänzt, dass bei dem Modell, welches sich im Arbeitsspeicher der Steuereinheit befindet, die momentane dreidimensionale Form des Fahrzeugs berücksichtigt ist, wie sie sich aufgrund der momentanen Stellung des Außenspiegels ergibt.

In ähnlicher Weise wie die Stellung des Außenspiegels kann auch ein Radeinschlag eines Vorderrads 20 des Fahrzeugs 10 berücksichtigt sein. Die Steuereinheit kann auch berücksichtigen, welche Breite die momentan an das Fahrzeug montierten Felgen aufweisen. Auch kann berücksichtigt werden, ob ein Cabrioverdeck des Fahrzeugs offen oder geschlossen ist. Außerdem kann erfasst werden, ob bestimmte Karosserieanbauteile montiert sind. Solche Anbauteile können beispielsweise ein Dachgepäckträger, ein auf eine Anhängerkupplung montierter Gepäckträger oder ein Schweller sein. Genauso kann berücksichtigt werden, ob eine Antenne oder eine Anhängerkupplung aus- oder eingefahren sind. Es kann auch berücksichtigt sein, ob eine Tür des Fahrzeugs geöffnet oder geschlossen ist.

Das Modell für den Pfosten 12 wurde anhand von Messdaten zweier Ultraschallsensoren 14, 16 ermittelt. Neben den beiden in Fig. 1 dargestellten Sensoren 14, 16 können bei dem Fahrzeug 10 weitere Sensoren, auch solche unterschiedlichen Typs, verwendet werden. Mittels der Ultraschallsensoren 14, 16 muss nicht die vollständige Form des Pfostens 12 erfasst werden. Es kann ausreichen, lediglich einen groben Umriss zu ermittelt. Bereiche des Pfostens 12, die nicht durch Messdaten der Sensoren 14, 16 erfasst worden sind, können dann beispielsweise mittels einer Grundform aus einer Datenbank zu dem Modell für den Pfosten 12 ergänzt werden. Die Datenbank kann ebenfalls in der Steuereinheit des Fahrerassistenzsystems gespeichert sein.

Die Position der Ultraschallsensoren 14, 16 ist bei dem Modell für das Fahrzeug 10 berücksichtigt. Über die Position wird auf die Position des Pfostens 12 im Verhältnis zu dem Modell des Fahrzeugs 10 selbst rückgeschlossen. Die mittels der Ultraschallsensoren 14, 16 erfasste Position des Pfostens 12 relativ zu dem Fahrzeug 10 wird ebenfalls in dem Arbeitsspeicher der Steuereinheit gespeichert.

Über den Datenbus des Fahrzeugs 10 wird an die Steuereinheit des Weiteren übertragen, mit welcher Geschwindigkeit das Fahrzeug über den Boden rollt. Für das in Fig. 1 dargestellte Beispiel ist die Richtung 22, in die das Fahrzeug zu dem dargestellten Zeitpunkt rollt, durch einen Pfeil angedeutet. Aus der gespeicherten Position des Pfostens 12 und der bekannten Bewegungsrichtung 22 des Fahrzeugs 10 kann durch die Steuereinheit des Fahrerassistenzsystems selbst dann ermittelt werden, wo sich der Pfosten 12 zu einem zukünftigen Zeitpunkt befindet, wenn die Position des Pfostens 12 durch die Sensoren 14, 16 selbst nicht mehr direkt erfasst werden kann. In Fig. 1 ist eine solche berechnete Position 24 des Pfostens 12 in Bezug auf das Fahrzeug 10 in Form von gestrichelten Linien dargestellt.

Durch die Steuereinheit wird der Abstand des Fahrzeugs 10 zu anderen Objekten, wie dem Pfosten 12, kontinuierlich ermittelt. Dazu werden die im Arbeitsspeicher der Steuereinheit befindlichen Modelle der einzelnen Objekte zugrunde gelegt. Anhand der Modelle kann der Abstand dazu durch die Steuereinheit mit Hilfe von geometrischen Berechnungen ermittelt werden.

Einem Fahrer des Fahrzeugs 10 wird über eine Anzeige angezeigt, wie groß der Abstand zu den einzelnen Objekten in der Umgebung des Fahrzeugs 10 ist. Die Steuereinheit kann auch dazu ausgelebt sein, ein Steuersignal an ein Bremssystem des Fahrzeugs 10 abzugeben. Dadurch kann z.B. ermöglicht werden, das Fahrzeug abrupt zum Stillstand zu bringen, wenn ansonsten eine Kollision unvermeidbar ist.

Bei dem in Fig. 1 gezeigten Beispiel versucht ein Fahrer das Fahrzeug 10 möglichst nahe an dem Pfosten 12 vorbeizumanövrieren. Dabei wird er durch das Fahrerassistenzsystem unterstützt, indem dieses dem Fahrer kontinuierlich Informationen über den Abstand des Pfostens 12 zum Fahrzeug 10 anzeigt. Im Verlauf des Manövers befindet sich der Pfosten 12 zu einem bestimmten Zeitpunkt auch an der Position 24. Das Fahrerassistenzsystem berücksichtigt beim Berechnen des Abstands zwischen dem Pfosten und dem Fahrzeug 10 auch die Höhe des Pfostens und die dreidimensionale Form des Fahrzeugs, wie sich aus dem Modell ergibt. Dabei wird durch das Fahrerassistenzsystem erkannt, dass der Außenspiegel 18 höher an dem Fahrzeug 10 angebracht ist, als der Pfosten 12 hoch ist. Entsprechend wird dem Fahrer angezeigt, dass er das Fahrzeug 10 weiter in die Fahrtrichtung 22 fahren kann und keine Kollision mit dem Pfosten 12 bevorsteht. Durch das Berücksichtigen der Höheninformation bei der Berechnung des Abstands zwischen dem Pfosten 12 und dem Fahrzeug 10 wird es somit ermöglicht, das Fahrzeug 10 besonders nahe an dem Pfosten 12 vorbeizumanövrieren. Der Fahrer muss dazu keine direkte Sicht auf den Pfosten 12 haben.

Durch das Fahrerassistenzsystem kann in vergleichbarer Weise z.B. auch ermittelt werden, welchen Abstand eine Stoßstange oder eine Schürze des Fahrzeugs 10 zu einem Bordstein hat, dem sich das Fahrzeug 10 bei einem Fahrmanöver nähert.

In Fig. 2 ist schematisch dargestellt, wie ein Steuergerät eines Fahrerassistenzsystems eines Fahrzeugs zu einer Umgebung 26 eines Fahrzeugs 28 eine Lage eines Postens 30 speichert. Zu der Umgebung 26 wird dazu für Teilbereiche 32 der Umgebung 26 die Information gespeichert, ob sich ein Teil des Pfostens 30 in dem jeweiligen Teilbereich 32 befindet. Von den Teilbereichen 32 sind in Fig. 2 lediglich drei mit einem Bezugszeichen versehen. Die Gesamtheit der Teilbereiche 32 gliedert die Umgebung 26 in ein Raster, das in Fig. 2 durch punktierte Linien dargestellt ist. Von dem Fahrzeug 28 und der Umgebung 26 ist lediglich ein Teil dargestellt. Das Fahrzeug 28 und die Umgebung 26 erstrecken sich in Fig. 2 weiter nach rechts jenseits einer Bruchlinie S.

Die Teilbereiche 32 sind quaderförmig. In Fig. 2 sind all diejenigen Teilbereiche 32 im Querschnitt dargestellt, die sich in einer Ebene befinden, welche senkrecht zu einer Fahrzeuglängsachse steht. Weitere quaderförmige Teilbereiche befinden sich, in Fahrzeuglängsrichtung gesehen, vor und hinter den in Fig. 2 im Schnitt dargestellten Teilbereichen 32.

Ob sich der Pfosten 30 oder ein anderer Gegenstand in einem bestimmten Teilbereich 32 befindet, wird von dem Fahrerassistenzsystem über in Fig. 2 nicht dargestellte Sensoren ermittelt. Der Pfosten 30 ragt in dem gezeigten Beispiel teilweise in die von den Sensoren überwachte Umgebung 26 hinein. Zu den entsprechenden Teilbereichen 32 wird deshalb in einem Arbeitsspeicher des Steuergeräts die Information abgelegt, dass diese Teilbereiche von einem Objekt blockiert sind. In Fig. 2 sind die betroffenen Teilbereiche 32 durch ein X markiert.

In dem Steuergerät ist zu jedem der überwachten Teilbereiche 32 gespeichert, welchen Abstand der jeweilige Teilbereich 32 zu dem Fahrzeug 26 hat. Zusammen mit der Information darüber, ob sich in einem Teilbereich ein Objekt befindet, kann durch das Steuergerät mit wenigen Prozessierungsschritten ermittelt werden, wie viel Raum einem Fahrer zum Manövrieren des Fahrzeugs 28 in der Umgebung 26 zur Verfügung steht. Durch das Steuergerät kann auch ein Warnsignal für den Fahrer erzeugt werden, wenn ein bestimmter Mindestabstand des Fahrzeugs 28 zu einem Objekt, also z.B. dem Pfosten 30, unterschritten wird.

In dem in Fig. 2 gezeigten Beispiel ist gezeigt, wie das Fahrzeug 28 so nahe an dem Posten 30 vorbeigeführt wird, dass ein Außenspiegel 34 des Fahrzeugs 28 über den Pfosten 30 ragt. Indem das Steuergerät Teilbereiche 32 überwacht, die quaderförmig sind, wird es ermöglicht, die Höhe, in welcher der Außenspiegel 34 an dem Fahrzeug 28 angebracht ist, und die Höhe des Pfostens 30 bei der Berechnung des Abstands zu berücksichtigen. So kann durch das Fahrerassistenzsystem dem Fahrer angezeigt werden, dass der Außenspiegel 34 nicht durch den Pfosten 30 gefährdet ist und das Fahrzeug 28 an dem Pfosten 30 vorbei manövriert werden kann.

Durch die Beispiele ist gezeigt, wie mittels einer Repräsentation des Fahrzeugs durch ein Modell, das Höheninformationen liefert, eine verbesserte Unterstützung eines Fahrers bei einem schwierigen Fahrmanöver ermöglicht ist.

## Patentansprüche

1. Verfahren zum Betreiben eines Fahrerassistenzsystems eines Fahrzeugs, wobei bei dem Verfahren mit wenigstens einem Sensor (14, 16) des Fahrerassistenzsystems eine relative Lage eines außerhalb des Fahrzeugs befindlichen Objekts (12) bezüglich des wenigstens einen Sensors (14, 16) erfasst wird und
anhand der erfassten Lage ein Abstand des Objekts (12) zu dem Fahrzeug ermittelt wird,
**dadurch gekennzeichnet, dass**
der Abstand des Objekts (12) zu dem Fahrzeug zusätzlich anhand eines Modells (10) für zumindest eine Kontur einer Außenfläche des Fahrzeugs ermittelt wird, wobei
bei dem Modell (10) eine dreidimensionale Form der Außenfläche nachgebildet ist.

2. Verfahren nach Anspruch 1,
**dadurch gekennzeichnet, dass**
zu einem an die Außenfläche angrenzenden Bereich außerhalb des Fahrzeugs Informationen darüber gespeichert werden, wo sich das Objekt in dem Bereich befindet.

3. Verfahren nach Anspruch 2,
**dadurch gekennzeichnet, dass**
der Bereich in eine Mehrzahl von Teilbereichen unterteilt ist und zu wenigstens einem Teilbereich die Information gespeichert wird, ob sich zumindest ein Teil des Objekts innerhalb des Teilbereichs befindet.

4. Verfahren nach einem der vorhergehenden Ansprüche,
**dadurch gekennzeichnet, dass**
zum Ermitteln des Abstands zusätzlich ein Modell für eine Form des Objekts (12) bereitgestellt wird.

5. Verfahren nach einem der vorhergehenden Ansprüche,
**dadurch gekennzeichnet, dass**
eine Eigenbewegung (22) des Fahrzeugs und/oder eine Bewegung des Objekts erfasst wird und zu einem vorgegebenen zukünftigen Zeitpunkt der Abstand anhand der erfassten Eigenbewegung (22) und/oder der erfassten Bewegung berechnet wird, falls zu dem zukünftigen Zeitpunkt eine relative Lage (24) des Objekts (12) von dem wenigstens einen Sensor (14, 16) nicht mehr erfassbar ist.

6. Verfahren nach einem der vorhergehenden Ansprüche,
**dadurch gekennzeichnet, dass**
für zumindest ein Bauteil (18, 20) des Fahrzeugs ein Zustand erfasst wird, wobei durch das zumindest eine Bauteil (18, 20) abhängig von seinem Zustand eine äußere Form des Fahrzeugs bestimmt ist, und dass das Modell (10) abhängig von dem erfassten Zustand verändert wird.

7. Fahrerassistenzsystem für ein Fahrzeug, ausgelegt zur Durchfürang des Verfahrens nach den Ansprüchen 1-5,
mit wenigstens einem Sensor (14,16) und einem Steuergerät, die miteinander verbunden sind wobei
der Sensor (14,16) dazu ausgelegt ist, eine Lage eines außerhalb des Fahrzeugs befindlichen Objekts (12) bezüglich des Sensors zu erfassen, und wobei
das Steuergerät dazu ausgelegt ist, ein Messsignal von dem wenigstens einen sensor (14,16) zu empfangen, anhand des Messsignals einen Abstand des Objekts (12) zu dem Fahrzeug zu ermitteln und in Abhängigkeit von dem ermittelten Abstand ein Steuersignal an einem Ausgang des Steuergeräts zu erzeugen,
**dadurch gekennzeichnet, dass**
in einem Speicher des Steuergeräts Daten gespeichert sind, durch die eine dreidimensionale Form einer Außenfläche des Fahrzeugs beschrieben ist.

8. Fahrerassistenzsystem nach Anspruch 7, ausgelegt zur Durchführung des Verfahrens nach Anspruch 6,
**dadurch gekennzeichnet, dass**
das Steuergerät dazu ausgelegt ist, ein Signal betreffend einen Zustand eines Bauteils des Fahrzeugs zu empfangen, wobei durch das Bauteil abhängig von seinem Zustand eine äußere Form des Fahrzeugs bestimmt ist, und dass
das Steuergerät dazu ausgelegt ist, anhand des Signals weitere Daten betreffend eine Änderung der Form zu ermitteln.

## Claims

1. Method for operating a driver assistance system of a vehicle, a position of an object (12) located outside the vehicle relative to the at least one sensor (14, 16) being detected in the method by at least one sensor (14, 16) of the driver assistance system, and, a distance from the object (12) to the vehicle being determined on the basis of the detected position, **characterised in that** the distance from the object (12) to the vehicle is additionally determined on the basis of a model (10) for at least one outline of an external surface of the vehicle, a three-dimensional shape of the external surface being reproduced in the model (10).

2. Method according to claim 1, **characterised in that**, for a region adjacent to the external surface and outside the vehicle, information is stored about where the object is located in the region.

3. Method according to claim 2, **characterised in that** the region is subdivided into a plurality of sub-regions and, for at least one sub-region, information is stored about whether at least a part of the object is located inside the sub-region.

4. Method according to any one of the preceding claims, **characterised in that**, for determining the distance, a model for a shape of the object (12) is additionally provided.

5. Method according to any one of the preceding claims, **characterised in that** a an inherent movement (22) of the vehicle and/or a movement of the object is detected and the distance at a predetermined future point in time is calculated on the basis of the detected inherent movement (22) and/or the detected movement, if at the predetermined future point in time a relative position (24) of the object (12) from the at least one sensor (14, 16) can no longer be detected.

6. Method according to any one of the preceding claims, **characterised in that** a state is detected for at least one component (18, 20) of the vehicle, an external shape of the vehicle being determined by the at least one component (18, 20) depending on the state thereof, and **in that** the model (10) is modified depending on the detected state.

7. Driver assistance system for a vehicle, configured for carrying out the method according to claims 1 to 5, comprising at least one sensor (14, 16) and one control unit which are interconnected, the sensor (14, 16) being configured to detect a position of an object (12) located outside the vehicle with respect to the sensor, and the control unit being configured to receive a measurement signal from the at least one sensor (14, 16), to determine a distance from the object (12) to the vehicle and to generate a control signal at an output of the control unit dependent on the determined distance, **characterised in that** data are stored in a storage device of the control unit, using which a three-dimensional shape of an external surface of the vehicle is recorded.

8. Driver assistance system according to claim 7, configured for carrying out the method according to claim 6, **characterised in that** the control unit is configured to receive a signal relating to a state of a component of the vehicle, an external shape of the vehicle being determined by the component depending on the state thereof, and **in that** the control unit is configured to determine further data relating to a modification of the shape on the basis of the signal.

## Revendications

1. Procédé de fonctionnement d'un système d'assistance au conducteur d'un véhicule, dans lequel, dans le procédé, avec au moins un capteur (14, 16) du système d'assistance au conducteur, on saisit une situation relative d'un objet (12) se trouvant à l'extérieur du véhicule par rapport au au moins un capteur (14, 16) et
une distance de l'objet (12) au véhicule est établie à l'aide de la situation saisie,
**caractérisé en ce que**
la distance de l'objet (12) au véhicule est en outre établie à l'aide d'un modèle (10) pour au moins un contour d'une surface externe du véhicule, dans lequel
on reproduit dans le modèle (10) une forme tridimensionnelle de la surface externe.

2. Procédé selon la revendication 1,
**caractérisé en ce que**,
dans une zone adjacente à la surface externe à l'extérieur du véhicule, on enregistre des informations sur le lieu où se trouve l'objet dans la zone.

3. Procédé selon la revendication 2,
**caractérisé en ce que**
la zone est subdivisée en une pluralité de zones partielles et, dans au moins une zone partielle, on enregistre les informations visant à indiquer si aumoins une partie de l' obj et se trouve à l'intérieur de la zone partielle.

4. Procédé selon l'une quelconque des revendications précédentes,
**caractérisé en ce que**,
pour établir la distance, on élabore également un modèle pour une forme de l'objet (12).

5. Procédé selon l'une quelconque des revendications précédentes,
**caractérisé en ce que**
on saisit un mouvement propre (22) du véhicule et/ou un mouvement de l'objet et, pour un moment ultérieur prédéfini, on calcule la distance à l'aide du mouvement propre (22) saisi et/ou du mouvement saisi au cas où, au moment ultérieur, une situation relative (24) de l'objet (12) ne peut plus être saisie par le au moins un capteur (14, 16).

6. Procédé selon l'une quelconque des revendications précédentes,
**caractérisé en ce que**
un état est saisi pour au moins un composant (18, 20) du véhicule, dans lequel une forme externe du véhicule est déterminée par le au moins un composant (18, 20) en fonction de son état et le modèle (10) est modifié en fonction de l'état saisi.

7. Système d'assistance au conducteur pour un véhicule, conçu pour mettre en oeuvre le procédé selon les revendications 1 à 5,
avec aumoins un capteur (14, 16) et un appareil de commande, qui sont connectés l'un à l'autre, dans lequel
le capteur (14, 16) est conçu pour saisir une situation d'un objet (12) se trouvant à l'extérieur du véhicule par rapport au capteur, et dans lequel
l'appareil de commande est conçu pour recevoir un signal de mesure du au moins un capteur (14, 16), établir une distance de l'objet (12) au véhicule à l'aide du signal de mesure et générer un signal de commande à une sortie de l'appareil de commande en fonction de la distance établie,
**caractérisé en ce que**
des données sont enregistrées dans une mémoire de l'appareil de commande, par le biais desquelles une forme tridimensionnelle d'une surface externe du véhicule est décrite.

8. Système d'assistance au conducteur selon la revendication 7, conçu pour mettre en oeuvre le procédé selon la revendication 6,
**caractérisé en ce que**
l'appareil de commande est conçu pour recevoir un signal concernant un état d'un composant du véhicule, dans lequel une forme externe du véhicule est déterminée par le composant en fonction de son état, et
l'appareil de commande est conçu pour établir d'autres données concernant une modification de la forme à l'aide du signal.
